(19) Europäisches Patentamt
European Patent Office
Office européen des brevets

(11) Veröffentlichungsnummer: **0 015 477**
**B1**

(12) # EUROPÄISCHE PATENTSCHRIFT

(45) Veröffentlichungstag der Patentschrift: **30.12.81**

(21) Anmeldenummer: **80100935.8**

(22) Anmeldetag: **26.02.80**

(51) Int. Cl.³: **C 08 F 36/18,** C 08 F 2/28, C 08 L 95/00 // (C08L95/00, 11/00)

(54) **Verfahren zur Herstellung eines kationischen Polychloroprenlatex sowie seine Abmischung mit Bitumenemulsion.**

(30) Priorität: **07.03.79 DE 2908965**

(43) Veröffentlichungstag der Anmeldung: **17.09.80 Patentblatt 80/19**

(45) Bekanntmachung des Hinweises auf die Patenterteilung: **30.12.81 Patentblatt 81/52**

(84) Benannte Vertragsstaaten: **BE DE FR GB IT NL**

(56) Entgegenhaltungen:
**DE-A-24 15 309**
**DE-A-24 15 389**
**DE-A-2 549 883**
**FR-A-2 235 179**

(73) Patentinhaber: **BAYER AG, Zentralbereich Patente, Marken und Lizenzen, D-5090 Leverkusen 1, Bayerwerk (DE)**

(72) Erfinder: **Nolte, Wilfried, Dr., Gronenborn C 33, D-5090 Leverkusen 1 (DE)**
Erfinder: **Esser, Heinz, Dr., Am Jungholzkamp 7, D-5093 Burscheid (DE)**

**EP 0 015 477 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung eines kationischen Polychloroprenlatex sowie seine Abmischung mit Bitumenemulsion

Die Erfindung betrifft ein Verfahren zur Herstellung eines kationischen Polychloroprenlatex durch Polymerisation von Chloropren mit gegebenenfalls weiteren Comonomeren in Gegenwart von Erdalkali- und/oder Alkalisalzen organischer Carbonsäuren oder einer Mischung von $Na_2HPO_4$ und $KH_2PO_4$ sowie eine Mischung des so hergestellten Latex mit einer kationischen Bitumenemulsion.

Kationische Polychloroprenlatices sind bekannt und beispielsweise in der DE-OS 2 549 883 beschrieben. Sie werden hergestellt, indem man als Emulgatoren bei dem Polymerisationsverfahren quaternäre Ammoniumsalze oder Säuresalze eines Hydroxy- oder Hydroxymethyl-alkylpolyamins einsetzt.

Diese beschriebenen Latices weisen im wesentlichen folgende Nachteile auf: Latices mit quaternären Ammoniumsalzen als Emulgatoren besitzen eine zu hohe Stabilität, die für viele Anwendungszwecke unerwünscht ist. Latices mit nicht-quaternären Ammoniumsalzen weisen einen zu niedrigen pH-Wert (Verätzungsgefahr) auf und sind zum Teil auch zu hochviskos.

Bereits bei der Herstellung und auch bei der Lagerung von Polychloroprenlatex wird Chlorwasserstoff abgespalten, wodurch der pH-Wert sich erniedrigt. Derartig saure und ätzend wirkende Latices sind in vieler Hinsicht unerwünscht. Eine nachträgliche Anhebung des pH-Wertes durch Zusatz von Basen ist bei Latices mit nicht-quaternären Ammoniumsalzen als Emulgatoren ohne besondere Stabilisierung mit nicht-ionischen Emulgatoren nicht möglich. Der Zusatz von nicht-ionischen Emulgatoren führt aber zu einer zu hohen Stabilität.

Es wurde nun gefunden, dass sich die geschilderten nachteiligen Eigenschaften der kationischen Polychloroprenlatices vermeiden lassen, wenn man bei der Polymerisation bzw. Copolymerisation von Chloropren mit gegebenenfalls weiteren Comonomeren ein Erdalkali- und/oder Alkalisalz einer organischen Carbonsäure oder ein Gemisch von $Na_2HPO_4$ und $KH_2PO_4$ zusetzt.

Die Erfindung betrifft somit ein Verfahren zur Herstellung eines kationischen Polychloroprenlatex durch Polymerisation von Chloropren mit gegebenenfalls bis zu 50 Gew.-Teilen eines copolymerisierbaren Comonomeren (bezogen auf 100 Gew.-Teile Gesamtmonomer) in wässriger Emulsion in Gegenwart von Ammoniumsalzen anorganischer oder organischer Säuren als Emulgatoren, das dadurch gekennzeichnet ist, dass man die Polymerisation in Anwesenheit eines Erdalkali- und/oder Alkalisalzes einer organischen Carbonsäure oder eines Gemisches von $Na_2HPO_4$ und $KH_2PO_4$ durchführt.

Neben Chloropren können weitere mit Chloropren copolymerisierbare Monomere bis zu 50 Gew.-Teilen, bevorzugt bis zu 10 Gew.-Teilen, bezogen auf 100 Gew.-Teile Gesamtmonomer, zugesetzt werden. Als Comonomere seien beispielsweise genannt:
Butadien, 2,3-Dichlorbutadien-1,3, Styrol, Divinylbenzol, Acrylnitril, Acrylsäureester, Acrylamid, N-Methylolacrylamid und dessen Äther.

Das Polymerisationsverfahren verläuft in wässriger Emulsion in an sich bekannter Weise bei Temperaturen von 0 bis 60, bevorzugt von 30 bis 50 °C, in Gegenwart üblicher Polymerisationsinitiatoren, wie beispielsweise organische Peroxide oder ein Gemisch aus einem organischen Peroxid mit einem Reduktionsmittel, wie Cumolhydroperoxid und Eisen-II-chlorid.

Als Molekulargewichtsregler können übliche Alkylmercaptane eingesetzt werden.

Der Umsatz beträgt in der Regel über 90%.

Als Emulgatoren werden Salze von Verbindungen der Formeln

a) $R-NH_2$ $R = C_8-C_{25}$ Alkyl oder Alkenyl

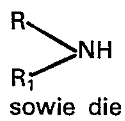 $R_1 = C_1-C_{25}$ Alkyl oder Phenyl

sowie die Ethylenoxid und/oder Propylenoxid Addukte mit 1–4 Einheiten.

b) 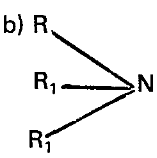 R und $R_1$ siehe unter a)

c) $R-N(R_4)-(-R_3-NR_5)_x R_6$

R = siehe oben
$R_3$ = Methylengruppe $-(-CH_2-)-_y$ mit Y = 1–4
$R_4$, $R_5$, $R_6$ = H, $C_1-C_4$ Alkyl
X = 1–3
Die Gesamtzahl der C-Atome in $R_4$, $R_5$ und $R_6$ ist nicht über 15.

d) $R-C(=O)-NH-R_3-NH_2$
R und $R_3$ = siehe oben
sowie die Ethylenoxid und/oder Propylenoxid Addukte mit 1–4 Einheiten

mit anorganischen Säuren oder bevorzugt organischen Carbonsäuren wie beispielsweise Chlorwasserstoff, Mono-, Di-, Tricarbonsäuren mit 1–6 C-Atomen wie Ameisensäure, Essigsäure, Propionsäure, Buttersäure, Oxalsäure, Malonsäure eingesetzt.

Als bevorzugte Emulgatoren werden die Carbonsäure-Salze von primären, sekundären oder tertiären Mono- oder Polyaminen, sowie Aminoamiden eingesetzt.

Besonders bevorzugt gelangen Säuresalze von Aminen der folgenden Formel zum Einsatz:

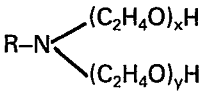

Es bedeuten R eine Alkyl- oder Alkenylgruppe mit 8–25 C'-Atomen und x und y 1–4.

Die Emulgatoren können entweder vor Polymerisationsbeginn zugesetzt werden oder bei Durchführung eines Zulaufverfahrens teilweise während der Polymerisation zugegeben werden. Die eingesetzte Emulgatormenge beträgt bevorzugt 1 bis 10 Gew.-%, besonders bevorzugt 2 bis 5 Gew.-%, bezogen auf den Gesamtmonomergehalt. Die Emulgatormenge kann wie geschildert auf Vorlage und Zulauf verteilt werden, wobei die Vorlage eine kleinere Menge enthalten kann.

Erfindungswesentliches Merkmal ist der Zusatz von Erdalkali und/oder Alkalisalzen einer organischen Carbonsäure vor oder während der Polymerisation in Mengen von 0,2 bis 5, bevorzugt von 0,5 bis 2,5, besonders bevorzugt von 0,8 bis 1,8 Gew.-Teilen, bezogen auf den Gesamtmonomergehalt. Bezüglich der Zugabe des Salzes ist es möglich, dieses sowohl vor der Polymerisation, während der Polymerisation sowie in einer kleineren Teilmenge vor der Polymerisation und der Rest im Zulaufverfahren während der Polymerisation dem Polymerisationsansatz zuzufügen.

Als Erdalkali- und/oder Alkalisalze besonders geeignet sind die Ammonium-, Natrium-, Kalium-, Lithium-, Magnesium-, Calcium-, Strontium- und Bariumsalze, bevorzugt die Natrium-, Kalium- oder Ammoniumsalze.

Als den Salzen zugrundeliegende Carbonsäuren geeignet sind gesättigte Mono-, Di- oder Tricarbonsäuren mit 1 bis 6 C-Atomen, bevorzugt mit 2–4 C-Atomen.

Beispielsweise seien aufgeführt: Ameisensäure, Essigsäure, Propionsäure, Buttersäure, Oxalsäure, Malonsäure, Citronensäure.

Das Mischungsverhältnis von $Na_2HPO_4$ und $KH_2PO_4$ beträgt bevorzugt 1:5 bis 5:1, besonders bevorzugt 1:2 bis 2:1 Gew.-Tle. Diese Mischung wird in Mengen von 0,5 bis 2,0 Gew.-Tln bezogen auf Gesamtmonomergehalt zugegeben.

Der erfindungsgemäss hergestellte kationische Polychloroprenlatex eignet sich aufgrund seiner guten Eigenschaften als Haftvermittler bei der Herstellung von mit anionischen Latices beschichteten synthetischen Fasern, zur Herstellung von elastifiziertem Beton und besonders bevorzugt zur Abmischung mit kationischen Bitumenemulsionen.

Die Erfindung betrifft daher weiterhin die Abmischung von einem kationischen Polychloroprenlatex mit einer kationischen Bitumenemulsion. Solche modifizierten Bitumenemulsionen finden Anwendung im Bautenschutz sowie vorzugsweise im Strassenbau.

Beim Einsatz im Strassenbau verursachen bereits geringe Mengen von kationischen Polychloroprenlatices eine Verbesserung der Eigenschaften der Bitumenemulsion. So wird z.B. das Intervall zwischen Erweichungspunkt und Brechpunkt deutlich gedehnt, die Duktilität stark verbessert und auch die Haftung des Bitumens an Splitt deutlich erhöht. Durch solche Verbesserungen der Bitumeneigenschaften wird die Lebensdauer von Strassenoberflächen entscheidend verlängert.

Bitumenemulsionen für Oberflächenbehandlungen sind im allgemeinen kationischer Natur. Daher ist es notwendig, dass der Polychloroprenlatex, der zur Vergütung eingesetzt werden soll, ebenfalls kationisch ist. Weiterhin muss der zugesetzte Latex eine gute Verträglichkeit mit der Bitumenemulsion aufweisen und rasch nach dem Aufsprühen auf Gestein oder Splitt brechen.

Die bisher bekannt gewordenen kationischen Polychloroprenlatices besitzen diese Eigenschaft nur in ungenügender Weise. Die als Emulgator bisher eingesetzten quaternären Alkylammoniumverbindungen setzen die Stabilität der vergüteten Bitumenemulsionen derartig herauf, dass die Latices nur ungenügend am Gestein «brechen». Regenschauer können dann das Bitumen aus den behandelten Strassenoberflächen herauswaschen. Ausserdem kann bei verzögertem Brechen die vergütete Bitumenemulsion infolge des Gefälles der Strassen zu den Rändern hin abfliessen.

Die geschilderten Nachteile lassen sich vermeiden, wenn ein kationischer, erfindungsgemäss hergestellter Polychloroprenlatex mit einer Bitumenemulsion vermischt wird, wobei bei der Herstellung des Polychloroprenlatex bevorzugt ein Salz eines nicht-quaternären Amins mit einer organischen Carbonsäure als Emulgator eingesetzt wird und der resultierende Latex eine Oberflächenspannung von 35 bis 40 dyn pro cm aufweist.

Die Mischung des Polychloroprenlatex mit der Bitumenemulsion kann entweder hergestellt werden durch Mischung des Latex mit der Emulsion unter Rühren oder durch Zusatz des Latex in die wässrige Phase bei der Emulgierung des Bitumens, wobei Mischtemperaturen bis 95 °C angewendet werden können. Pro 100 Gew.-Teile Bitumenemulsion werden 1,0 bis 10,0 Gew.-Teile, bevorzugt 2,0 bis 5,0 Gew.-Teile, des Polychloroprenlatex eingesetzt.

Kationische Bitumenemulsionen, die mit den erfindungsgemässen Polychloroprenlatices vergütet wurden, zeigen eine einwandfreie Verarbeitbarkeit, besonders hinsichtlich der Benetzung von Splitt und beim «Brechen» am Splitt. Der Einsatz der vergüteten Bitumenemulsion führt zu vorteilhaften Strassenoberflächen mit nur sehr geringen Mengen an Rollsplitt, verbessertem Temperaturverhalten und verlängerter Lebensdauer.

Die Messung des Brechverhaltens erfolgt gemäss DIN 1995, Abs. 3.28 U 28. Die Verträglichkeit des Polychloroprens mit der Bitumenemulsion wird danach beurteilt, ob beim Mischen und nach einer einwöchigen Lagerung Ausscheidungen auftreten. Eine geringe, unvermeidliche Trennung wird zur Beurteilung nicht mit herangezogen. Die Testmischung besteht aus 5 Gew.-Teilen Polychloroprenlatex und 95 Gew.-Teilen Bitumenemulsion.

Beispiele:
Falls nicht anders angegeben, bedeuten Teile Gewichtsteile, bezogen auf 100 Gewichtsteile Monomer.

Beispiel 1
In ein Reaktionsgefäss, das mit Rührer, Rückflusskühler, drei Tropftrichtern sowie Stickstoffein- und -auslass ausgerüstet ist, werden eine Lösung aus 35,0 Tln. Wasser, 0,15 Tln. Bis-(2-hydroxyethyl)-oleylamin, 0,15 Tln. Essigsäure und 0,01 Tln. Eisen-II-chlorid sowie 8,0 Tln. Chloropren mit 0,03 Tln. n-Dodecylmercaptan vorgelegt. Der Luftsauerstoff im Gefäss wird durch Stickstoff verdrängt und die Temperatur auf 50 °C erhöht. Zuläufe aus 92,0 Tln. Chloropren und 0,28 Tln. n-Dodecylmercaptan sowie 35,0 Tln. Wasser, 2,5 Tln. Bis-(2-hydroxyethyl)-oleylamin, 0,75 Tln. Essigsäure und 0,6 Tln. Natriumacetat, ferner 10 Tln. Wasser, 0,1 Tln. ethoxyliertes Nonylphenol (10 Mol Ethylenoxid pro Mol Nonylphenol) und 0,1 Tln. Cumolhydroperoxid werden über einen Zeitraum von 5 Stunden gleichmässig zudosiert. Anschliessend wird 2 Std. lang nachgerührt. Der Chloroprenumsatz beträgt 99%. Der erhaltene Latex hat eine Konzentration von 53% Feststoff, etwa 1% Ausscheidungen, einen pH-Wert von 4,0 und eine Brookfield-Viskosität (Spindel 2, 60 Upm) von 188 mPa.s.

Beispiel 2–5
In den Beispielen 2–5 wird wie in Beispiel 1 verfahren mit der Ausnahme, dass Beispiel 3 einen Batchansatz darstellt, bei dem Monomer- und Emulgator-Zulauf entfallen. Einsatzmengen und Resultate sind in Tabelle 1 zusammengefasst. Diese Beispiele demonstrieren die Wirksamkeit des Natriumacetat. Beispiel 1 wird mit in die Tabelle aufgenommen.

Tabelle 1
Beispiele 1–5

| | 1 | 2 | 3 | 4 | 5 |
|---|---|---|---|---|---|
| Vorlage | | | | | |
| Wasser | 35.0 | 38.0 | 70.0 | 38.0 | 35.0 |
| Bis-(2-hydroxyethyl)-oleylamin | 0.15 | 0.2 | 3.45 | 0.2 | 0.15 |
| Essigsäure | 0.15 | 0.2 | 1.2 | 0.2 | 0.15 |
| Eisen-II-chlorid | 0.01 | 0.02 | 0.02 | 0.05 | 0.1 |
| Natriumacetat | – | – | 1.2 | – | – |
| Chloropren | 8.0 | 8.0 | 100.0 | 12.0 | 12.0 |
| n-Dodecylmerkaptan | 0.03 | 0.03 | 0.34 | 0.03 | 0.03 |
| Monomer-Zulauf | | | | | |
| Chloropren | 92.0 | 92.0 | – | 88.0 | 88.0 |
| n-Dodecylmerkaptan | 0.28 | 0.31 | – | 0.2 | 0.25 |
| Emulgator-Zulauf | | | | | |
| Wasser | 35.0 | 32.0 | – | 32.0 | 37.0 |
| Bis-(2-hydroxyethyl)oleylamin | 2.5 | 3.25 | – | 3.25 | 2.5 |
| Essigsäure | 0.75 | 1.0 | – | 1.0 | 0.75 |
| Natriumacetat | 0.6 | 1.2 | – | 1.8 | 0.3 |
| Initiator-Zulauf wie in Beispiel 1 | | | | | |
| Konzentration [%] | 53.3 | 53.0 | 53.5 | 53.4 | 53.3 |
| Umsatz [%] | 99 | 98 | 99 | 99 | 99 |
| Ausscheidungen [%] | 1 | 1 | 0.5 | 0.5 | 1 |
| pH-Wert | 4.0 | 4.1 | 4.1 | 4.5 | 3.8 |
| Brookfield-Viskosität (Spindel 2, 60 Upm) [mPa.s] | 188 | 130 | 148 | 68 | 310 |
| Oberflächenspannung [dyn/cm] | 50 | 43 | 47 | 37 | 51 |
| Emulgatornachsatz [Tle. 20%ige Lösung/100 Teile Latex] | 4.5 | 2.5 | 2.5 | – | 4.0 |
| OFS nach Emulgatornachsatz | 39 | 37 | 39 | – | 37 |
| Verträglichkeit mit Bitumenemuls. | gut | gut | gut | gut | gut |

Tabelle 1
Beispiele 1–5

| | 1 | 2 | 3 | 4 | 5 |
|---|---|---|---|---|---|
| Brechverh. vergüteter Bitumenemuls. | do. | do. | do. | do. | do. |
| pH-Wert nach 2-monat. Lagerung | 4.0 | | | 4.6 | |

Beispiel 6 bis 9

Die Beispiele 6 und 7 zeigen den Einsatz zweier weiterer Amine. Die Beispiele 8 und 9 sind Vergleichsbeispiele ohne Einsatz von Natriumacetat.

Es wird wie in Beispiel 1 verfahren mit der Ausnahme von Beispiel 9, welches wiederum einen Batchansatz darstellt.

Tabelle 2
Beispiele 6 bis 9

| Vorlage | 6 | 7 | 8 | 9 |
|---|---|---|---|---|
| Wasser | 38.0 | 38.0 | 38.0 | 70.0 |
| Bis-(2-hydroxyethyl)-oleylamin | – | – | 0.2 | 3.45 |
| N-Alkyl-trimethylendiamin von Tallöl abgeleitet | 0.2 | – | – | – |
| Dodecylamin | – | 0.2 | – | – |
| Essigsäure | 0.2 | 0.2 | 0.2 | 1.2 |
| Eisen-II-chlorid | 0.02 | 0.02 | 0.02 | 0.02 |
| Chloropren | 8.0 | 8.0 | 8.0 | 100.0 |
| n-Dodecylmercaptan | 0.03 | 0.03 | 0.03 | 0.34 |
| Monomer-Zulauf | | | | |
| Chloropren | 92.0 | 92.0 | 92.0 | – |
| n-Dodecylmercaptan | 0.31 | 0.31 | 0.3 | – |
| Emulgator-Zulauf | | | | |
| Wasser | 32.0 | 32.0 | 32.0 | – |
| Bis-(2-hydroxyethyl)-oleylamin | – | – | 3.25 | – |
| N-Alkyl-trimethylendiamin Tallöl abgeleitet | 3.25 | – | – | – |
| Dodecylamin | – | 3.25 | – | – |
| Essigsäure | 1.0 | 1.0 | 1.0 | – |
| Natriumacetat | 1.2 | 1.2 | – | – |
| Initiator-Zulauf wie in Beispiel 1 | | | | |
| Konzentration | 53.3 | 53.7 | 53.8 | Reaktion |
| Umsatz | 99 | 100 | 100 | zu heftig |
| Ausscheidungen | keine | keine | *) | musste |
| pH-Wert | 4.4 | 4.5 | 3.0 | abgebrochen |
| Brookfield-Viskosität | 1975 | 450 | *) | werden |
| Oberflächenspannung | 48 | 41 | *) | – |
| Emulgatornachsatz | 5.0 | 0.5 | – | – |
| OFS nach Emulgatornachsatz | 39 | 37 | | |
| Verträglichkeit mit Bitumenemuls. | gut | gut | – | – |
| Brechverhalten mit Bitumenemuls. | gut | gut | – | – |
| pH-Wert nach 2-monat. Lagerung | | | 2.0 | |

*) Werte nicht bestimmbar, da Latex zu viskos.

Tabelle 3
Beispiele 10–15
Wie Beispiel 1, jedoch Natriumacetat durch andere Salze ersetzt

| Beispiel | 10 | 11 | 12 | 13 | 14 | 15 |
|---|---|---|---|---|---|---|
| Salz Art | Ammonium-acetat | Natrium-formiat | Calcium acetat | Kalium-propionat | Natrium-maleinat | $Na_2HPO_4$/ $KH_2PO_4$ |
| Menge | 1.2 | 1.2 | 1.2 | 1.2 | 1.2 | 0.75/0.7 |
| Konzentration [%] | 53.8 | 54.1 | 54.0 | 53.7 | 50.8 | 53.5 |
| Umsatz [%] | 99.5 | 100 | 100 | 99 | 94 | 99 |
| Ausscheidungen [%] | Spur | 0.1 | Spur | Spur | 8 | 1 |
| pH-Wert | 4.6 | 4.1 | 4.2 | 4.2 | 4.5 | 4.0 |
| Brookfield Visk. | 46 | 43 | 45 | 76.5 | 20.5 | 27.5 |
| Oberflächenspannung | 42 | 46 | 48 | 46 | 37 | 37 |
| Emulgatornachsatz | 2.0 | 2.5 | 2.5 | 3.0 | – | – |
| OFS nach Emulg.-Nachs. | 37 | 37 | 38 | 36.5 | – | – |
| Verträglichkeit mit Bitumenemulsion | gut | gut | gut | gut | gut | gut |
| Brechverhalten | gut | gut | gut | gut | gut | gut |

**Patentansprüche**

1. Verfahren zur Herstellung eines kationischen Polychloroprenlatex durch Polymerisation von Chloropren mit gegebenenfalls bis zu 50 Gew.-Teilen eines copolymerisierbaren Comonomeren (bezogen auf 100 Gew.-Teile Gesamtmonomer) in wässriger Emulsion in Gegenwart von Ammoniumsalzen anorganischer oder organischer Säuren als Emulgatoren, dadurch gekennzeichnet, dass man die Polymerisation in Anwesenheit eines Erdalkali- und/oder Alkalisalzes einer organischen Carbonsäure oder eines Gemisches von $Na_2HPO_4$ und $KH_2PO_4$ durchführt.

2. Verfahren gemäss Anspruch 1, dadurch gekennzeichnet, dass man die Polymerisation bei Temperaturen von 0–60 °C durchführt.

3. Verfahren gemäss Anspruch 1, dadurch gekennzeichnet, dass das Erdalkali- und/oder Alkalisalz einer organischen Carbonsäure in Mengen von 0,2 bis 5 Gew.-Tln, bezogen auf Gesamtmonomergehalt zugegeben wird.

4. Verfahren gemäss Ansprüche 1 und 3, dadurch gekennzeichnet, dass das Erdalkali- und/oder Alkalisalz einer organischen Carbonsäure in Mengen von 0,5 bis 2,5 Gew.-Tln, bezogen auf Gesamtmonomergehalt zugegeben wird.

5. Verfahren gemäss Ansprüche 1 und 3, dadurch gekennzeichnet, dass das Erdalkali- und/oder Alkalisalz einer organischen Carbonsäure in Mengen von 0,8 bis 1,8 Gew.-Tln, bezogen auf Gesamtmonomergehalt zugegeben wird.

6. Verfahren gemäss Anspruch 1, dadurch gekennzeichnet, dass das Gemisch von $Na_2HPO_4$ und $KH_2PO_4$ in Mengen von 0,5 bis 2,0 Gew.-Tln bezogen auf Gesamtmonomergehalt zugegeben wird, wobei das Mischungsverhältnis von $Na_2HPO_4$ zum $KH_2PO_4$ 1:5 bis 5:1 Gew.-Tln beträgt.

7. Mischung eines gemäss Ansprüchen 1–6 hergestellten kationischen Polychloroprenlatex mit einer kationischen Bitumenemulsion, gekennzeichnet durch einen Gehalt von 1 bis 10 Gewichtsteile Polychloroprenlatex, bezogen auf 100 Gew.-Tln Bitumenemulsion.

8. Mischung gemäss Anspruch 7, gekennzeichnet durch einen Gehalt von 2 bis 5 Gewichtsteile Polychloroprenlatex, bezogen auf 100 Gew.-Tln Bitumenemulsion.

**Revendications**

1. Procédé de préparation d'un latex cationique de polychloroprène par polymérisation du chloroprène avec, le cas échéant, jusqu'à 50 parties en poids d'un comonomère copolymérisable (pour 100 parties en poids de monomères totaux) en émulsion aqueuse en présence de sels d'ammonium d'acides minéraux ou organiques qui servent d'agents émulsionnants, caractérisé en ce que l'on effectue la polymérisation en présence d'un sel alcalino-terreux et/ou alcalin d'un acide organique carboxylique ou d'un mélange de $Na_2HPO_4$ et de $KH_2PO_4$.

2. Procédé selon la revendication 1, caractérisé en ce que l'on effectue la polymérisation à des températures de 0 à 60 °C.

3. Procédé selon la revendication 1, caractérisé en ce que le sel alcalino-terreux et/ou alcalin d'un acide organique carboxylique est ajouté en quantité de 0,2 à 5 parties en poids, par rapport aux monomères totaux.

4. Procédé selon les revendications 1 et 3, caractérisé en ce que le sel alcalino-terreux et/ou alcalin d'un acide organique carboxylique est ajouté en quantité de 0,5 à 2,5 parties en poids, par rapport aux monomères totaux.

5. Procédé selon les revendications 1 et 3, caractérisé en ce que le sel alcalino-terreux et/ou alcalin d'un acide organique carboxylique est ajouté en quantité de 0,8 à 1,8 partie en poids par rapport aux monomères totaux.

6. Procédé selon la revendication 1, caractérisé en ce que le mélange de $Na_2HPO_4$ et $KH_2PO_4$ est ajouté en quantité de 0,5 à 2,0 parties en poids par

rapport aux monomères totaux et en ce que les proportions relatives de $Na_2HPO_4$ et $KH_2PO_4$ dans le mélange sont de 1:5 à 5:1 parties en poids.

7. Mélange d'un latex cationique de polychloroprène préparé selon les revendications 1 à 6, avec une émulsion cationique de bitume, caractérisé en ce qu'il contient de 1 à 10 parties en poids de latex de polychloroprène pour 100 parties en poids de l'émulsion de bitume.

8. Mélange selon la revendication 7, caractérisé en ce qu'il contient 2 à 5 parties en poids de latex de polychloroprène pour 100 parties en poids d'émulsion de bitume.

**Claims**

1. A process for the production of a cationic polychloroprene latex by polymerising chloroprene, optionally with up to 50 parts by weight of a copolymerisable comonomer (based on 100 parts by weight of total monomer), in aqueous emulsion in the presence of ammonium salts of inorganic or organic acids as emulsifiers, characterised in that polymerisation is carried out in the presence of an alkaline earth and/or alkali salt of an organic carboxylic acid or in the presence of a mixture of $Na_2HPO_4$ and $KH_2PO_4$.

2. A process according to Claim 1, characterised in that polymerisation is carried out at temperatures in the range of from 0 to 60 °C.

3. A process according to Claim 1, characterised in that the alkaline earth and/or alkali salt of an organic carboxylic acid is added in a quantity of from 0.2 to 5 parts by weight, based on the total monomer content.

4. A process according to Claims 1 to 3, characterised in that the alkaline earth and/or alkali salt of an organic carboxylic acid is added in a quantity of from 0.5 to 2.5 parts by weight, based on the total monomer content.

5. A process according to Claims 1 to 3, characterised in that the alkaline earth and/or alkali salt of an organic carboxylic acid is added in a quantity of from 0.8 to 1.8 parts by weight, based on the total monomer content.

6. A process according to Claim 1, characterised in that the mixture of $Na_2HPO_4$ and $KH_2PO_4$ is added in a quantity of from 0.5 to 2.0 parts by weight, based on the total monomer content, the mixing ratio of $Na_2HPO_4$ to $KH_2PO_4$ being between 1:5 and 5:1 parts by weight.

7. A mixture of a cationic polychloroprene latex produced according to Claims 1 to 6 with a cationic bitumen emulsion, characterised by a content of from 1 to 10 parts by weight of bitumen emulsion.

8. A mixture according to Claim 7, characterised by a content of from 2 to 5 parts by weight of polychloroprene latex, based on 100 parts by weight of bitumen emulsion.